# EUROPÄISCHE PATENTANMELDUNG

(11) **EP 1 505 321 A1**
(43) Veröffentlichungstag der Anmeldung: **09.02.2005**
(21) Anmeldenummer: 03725778.9
(22) Anmeldetag: 14.05.2003
(51) Int. Cl.: F16H 63/30

(54) **SCHUBSTANGENVERBINDUNGSKONSTRUKTION UND KONSTRUKTION ZUM VERHINDERN EINES MITROTIERENS DER KOLBENSTANGE**

(30) Priorität: 15.05.2002 JP 2002139776
(71) Anmelder: Aichi Machine Industry Co. Ltd., Nagoya-shi, Aichi 456-8601 (JP)
(72) Erfinder: TSUGE, Hitoshi Aichi Machine Industry Co., Ltd, Nagoya-shi, Aichi 456-8601 (JP)
(74) Vertreter: VOSSIUS & PARTNER
(86) Internationale Anmeldenummer: PCT/JP2003/006033
(87) Internationale Veröffentlichungsnummer: WO 2003/098077

(57) **Abstract**

The object of the present invention is to set shift rods around the counter shaft, situated away from a striking rod, and prevent the rotation of non shift fork equipped shift rods.

As a means to attain said object, the present invention provide a connecting structure of shift rods characterized by connecting said non shift fork equipped shift rods (5, 7) to said shift fork equipped shift rods (9, 10) through inversion levers (12, 13) having mid section fulcrums (16, 17), and also provides a rotation preventing structure, with fork type two finger shift brackets (14, 15) extending from said non shift fork equipped shift rods (5, 7), to prevent the rotation of said non shift fork equipped shift rods (5, 7) by catching said shift fork equipped shift rods (6, 8) adjacent to said non shit fork equipped shift rods (5, 7), in said shift brackets (14, 15).

## Beschreibung

### FIELD OF THE INVENTION

The present invention mainly relates to the shift rod connecting structure and the rotation preventing structure of a manual multiple speed transmission, particularly a manual six speed transmission.

### BACKGROUND OF THE INVENTION

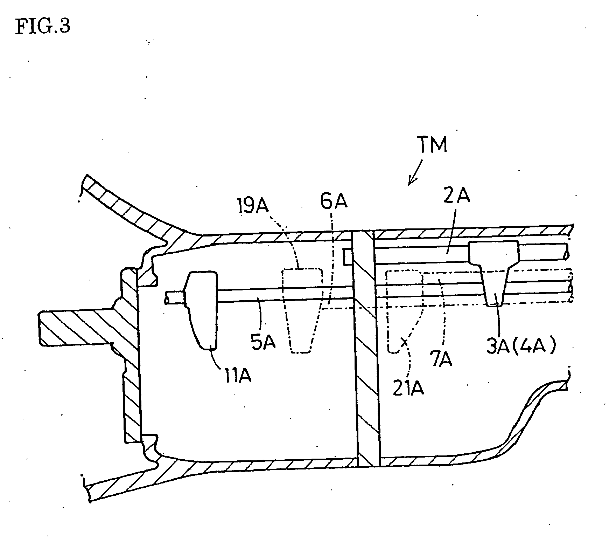

Up to now, in a manual five speed transmission, a striking rod (2A) equipped with striking levers (3A, 4A) has been set into the upper part of a transmission TM, and further, in said transmission TM, the 1^{st} and 2^{nd} speed shift rod (6A), the 3^{rd} and 4^{th} speed shift rod (5A) and the 5^{th} speed and reverse shift rod (7A) have been selectively connected to said striking rod (2A), through said striking levers (3A, 4A), with said the 1^{st} and 2^{nd} shift rod (6A) being equipped with the 1^{st} and 2^{nd} shift fork (19A), and said 3^{rd} and 4^{th} shift rod (5A) being equipped with the 3^{rd} and 4^{th} shift fork (11A), further, said 5^{th} and reverse shift rod (7A) being equipped with the 5^{th} speed and reverse shift fork (21A), as shown in Fig. 3.

In the case of shift operation, shift stroke of said striking rod (2A) is transmitted to said shift rods (5A, 6A, 7A) through said striking levers (3A, 4A), and in a case where the length of said striking levers (3A, 4A) is set to be longer, the strength of said striking levers (3A, 4A) is ensured to be great enough to withstand the excessive stress effected upon them during shift operation, by setting said shift rods (5A, 6A, 7A) near said striking rod (2A).

Being based on said conventional manual five speed transmission TM, in order to design a more multiple speed transmission, for instance, a six speed transmission, said 5^{th} speed-reverse shift rod (7A) equipped with said 5^{th} speed-reverse shift fork (21A) is swapped with a 5^{th} and 6^{th} speed shift rod equipped with a 5^{th} and 6^{th} speed shift fork, accompanied by the addition of a reverse shift rod equipped with a reverse shift fork. Nevertheless, in said conventional structure, since said shift rods (5A, 6A, 7A) should be set on the periphery of the main shaft MS near said striking rod (2A), in a case where said additional rod is set near the counter shaft CS, it is problematic in that the interlock mechanics and layout may become overcomplicated, resulting in an oversized manual transmission TM, and a design disadvantage.

Alternately, it is suggested that said additional shift rod be set on the periphery of said main shaft MS, however, in this case, the resulting large sized shift fork is problematic in ensuring enough strength during shift operation.

### DISCLOSURE OF THE INVENTION

To solve the above mentioned problems, the present invention provides a connecting structure of shift rods characterized by the connecting of a non shift fork equipped shift rod (5, 7) to a shift fork equipped shift rod (9, 10) through an inversion lever (12, 13) having a fulcrum (16, 17) at its midsection.

More concretely, said non shift fork equipped shift rod(s) (5, 7) is (are) an upper side 3^{rd} and 4^{th} speed shift rod (5) and/or an upper side 5^{th} and 6^{th} speed shift rod (7), and said shift fork equipped rod(s) (9, 10) is (are) a lower side 3^{rd} and 4^{th} speed shift rod (9) and/or a lower side 5^{th} and 6^{th} speed shift rod (10).

Further, the present invention provides a rotation preventing structure within said connecting structure of said shift rods, characterized by a fork type two finger shift bracket (14, 15) extending from said non shift fork equipped shift rod (5, 7) to prevent the rotation of said non shift fork equipped shift rod (5, 7) by catching said shift fork equipped shift rod (6, 8) being situated adjacent to said non shift fork equipped shift rod (5, 7) in said shift bracket(14,15).

More concretely, said non shift fork equipped shift rod(s) (5, 7) is (are) an upper side 3^{rd} and 4^{th} speed shift rod (5) and/or an upper side 5^{th} and 6^{th} speed shift rod (7), and said shift fork equipped shift rod (6, 8) is(are) a 1^{st} and 2^{nd} speed shift rod (6) being adjacent to said 3^{rd} and 4^{th} speed shift rod (5), and/or a reverse shift rod (8) being adjacent to said upper side 5^{th} and 6^{th} speed shift rod (7).

By providing said inversion levers (12, 13) to transmit the stroke to said shift rods (9, 10), said shift rods (9, 10) can be set on the periphery of a counter shaft CS, which is away from said striking rod (2), so that even in the case of a manual six speed transmission, the shift fork's shapes are retained, providing for design advantages.

Since shift forks attached to said shift rods (6, 8) engage with the sleeve, the rotation of said shift rods around the axis is prevented, following which said fork type two finger shift brackets (14, 15) extending from said non fork shift equipped shift rods (5, 7) catch said fork shift equipped shift rods (6, 8), and the rotation of said shift rods (5, 7) are prevented through said shift rods (6, 8).

Further, loads effected on said shift rods are dispersed to two shift rods (6, 8) and shift rods (5, 7) through shift brackets (14, 15).

### BRIEF DESCRIPTION OF THE DRAWINGS

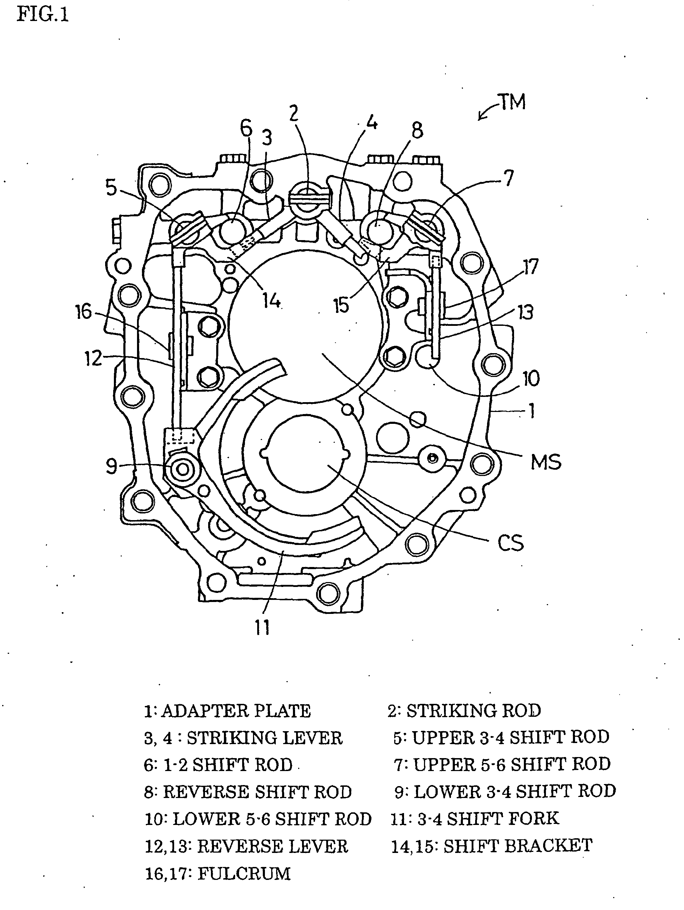

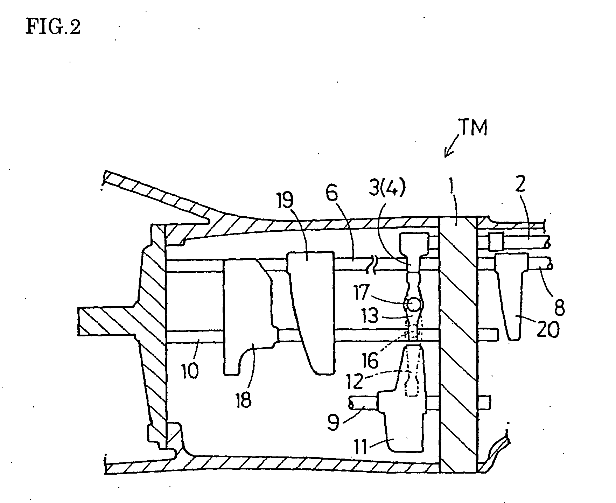

Figs. 1 and 2 show an embodiment of the present invention.

Fig. 1 shows an explanatory sectional view of the manual transmission.

Fig. 2 shows an explanatory sectional side view of the manual transmission.

Fig. 3 shows an explanatory sectional side view of the conventional manual transmission.

### EXPLANATION OF CODES

- 1: adapter plate
- 2: striking rod
- 3, 4: striking levers
- 5: upper side 3^{rd} and 4^{th} speed shift rod (non shift fork equipped shift rod)
- 6: 1^{st} and 2^{nd} speed shift rod (shift rod equipped with a shift fork)
- 7: upper side 5^{th} and 6^{th} speed shift rod (non shift fork equipped shift rod)
- 8: reverse shift rod (shift rod equipped with a shift fork)
- 9: lower side 3^{rd} and 4^{th} speed shift rod
- 10: lower side 5^{th} and 6^{th} speed shift rod
- 11: 3^{rd} and 4^{th} speed shift fork
- 12, 13: inversion levers
- 14, 15: shift brackets
- 16, 17: fulcrums

### PREFERED EMBODIMENT

The present invention is described by the embodiment shown in Figs. 1 and 2. In the upper side of the adapter plate (1) of a manual six speed transmission, a striking rod (2) equipped with striking levers (3, 4), an upper side 3^{rd} and 4^{th} speed shift rod (5) (3-4 shift rod), a 1^{st} and 2^{nd} shift rod (6) (1-2 shift rod (6)) being situated adjacent to said 3-4 shift rod (5), an upper side 5^{th} and 6^{th} speed shift rod (7) (5-6 shift rod), a reverse shift rod (8) being situated adjacent to said 5-6 shift rod (7), are each supported on axes.

Further, in the lower side of said adapter plate (1), a lower side 3^{rd} and 4^{th} speed shift rod (9) (3-4 shift rod) and a lower side 5^{th} and 6^{th} speed shift rod (10) are each supported on axes, with said lower side 3-4 shift rod (9) and said lower side 5-6 shift rod (10), each being equipped with a 3^{rd} and 4^{th} speed shift fork (11) (3-4 shift fork) and a 5^{th} and 6^{th} speed shift fork (18) (5-6 shift fork) in the lower side of said adapter plate (1).

In said manual transmission, said 1-2 shift rod (6) and said reverse shift rod (8) are each equipped with a 1^{st} and 2^{nd} speed shift fork (19) (1-2 shift fork) and a reverse shift fork (20), said 1-2 shift fork (19) and said reverse shift fork (20) each engaging with the sleeve to prevent the rotation of said 1-2 shift rod (6) and said reverse shift rod (8) around said axes.

Further, said upper side 3-4 shift rod (5) and said upper side 5-6 shift rod (7), each connect with said lower side 3-4 shift rod (9) and said lower side side 5-6 shift rod (10) through said inversion levers (12, 13), so that the stroke being transmitted from said striking rod (2) to said upper side 3-4 shift rod (5) and said upper side 5-6 shift rod (7) through said striking levers (3,4) is respectively transmitted to said lower side 3-4 shift rod (9) and said lower side 5-6 shift rod (10) being inverted by said inversion levers (12, 13).

By transmitting the stroke to said shift rods (9, 10) using said inversion levers (12, 13), said lower side 3-4 shift rod (9) and said lower side 5-6 shift rod (10) can each be set on the periphery of the counter shaft CS, which is situated away from said striking rod (2), so that even in the case of a manual six speed transmission, the shape of said shift forks are retained, providing for design advantages.

The fork type two finger shift brackets (14, 15) each extend from said upper side 3-4 shift rod (5) and said upper side 5-6 shift rod (7), and said shift bracket (14) of said upper side 3-4 shift rod (5) catches said 1-2 shift rod (6) and said shift bracket (15) of said upper side 5-6 shift rod (7) catches said reverse shift rod (8), so that the rotation of said upper side 3-4 shift rod (5) and said upper side 5-6 shift rod (7) around the axes are respectively prevented.

### INDUSTRIAL UTILITY

In the present invention, since the shift rods can each be set on the periphery of the counter shaft CS, which is situated away from said striking rod, even in the case of a manual six speed transmission TM, the transmission size is minimized and operation simplified, providing for design advantages.

Further, since the rotation of shift rods without shift forks around their respective axes are each prevented by shift rods with shift forks, interference on interlock by rod rotation and loosening of said inversion lever are certainly prevented.

## Claims

1. A connecting structure of shift rods **characterized by** the connecting of a non shift fork equipped shift rod to a shift fork equipped shift rod through an inversion lever having a fulcrum at its midsection.

2. A connecting structure of shift rods of Claim 1, wherein said non shift fork equipped shift rod(s) is (are) an upper side 3^{rd} and 4^{th} speed shift rod and/or an upper side 5^{th} and 6^{th} speed shift rod, and said shift fork equipped shift rod(s) is (are) a lower side 3^{rd} and 4^{th} speed shift rod and/or a lower side 5^{th} and 6^{th} speed shift rod.

3. A rotation preventing structure within said connecting structure of said shift rods of claim 1 or 2, **characterized by** a fork type two finger shift bracket extending from said non shift fork equipped shift rod to prevent the rotation of said non shift fork equipped shift rod by catching said shift fork equipped shift rod being situated adjacent to said non shift fork equipped shift rod in said shift bracket.

4. A rotation preventing structure of the shift rod(s) of Claim 3, wherein said non shift fork equipped shift rod(s) is (are) an upper side 3^{rd} and 4^{th} speed shift rod and/or an upper side 5^{th}-6^{th} speed shift rod, and said shift fork equipped shift rod(s) is(are) a 1^{st} and 2^{nd} speed shift rod being situated adjacent to said upper side 3^{rd} and 4^{th} speed shift rod and/or a reverse shift rod being situated adjacent to said upper side 5^{th} and 6^{th} speed shift rod.
